# EUROPÄISCHE PATENTANMELDUNG

(11) **EP 2 333 452 A2**
(43) Veröffentlichungstag der Anmeldung: **15.06.2011**
(21) Anmeldenummer: 10189901.1
(22) Anmeldetag: 03.11.2010
(51) Int. Cl.: F24J 2/52, H01L 31/048

(54) **Befestiger**

(30) Priorität: 25.11.2009 DE 102009047152
(71) Anmelder: BB Stanz-und Umformtechnik GmbH, 06536 Berga (DE)
(72) Erfinder: Humm, Siegfried, 74214 Schöntal Westernhausen (DE); Blesch, Günther, 97957 Assamstadt (DE)
(74) Vertreter: Dilg, Haeusler, Schindelmann Patentanwaltsgesellschaft mbH

(57) **Zusammenfassung**

Ein Befestiger (1) zum Befestigen eines Gegenstands an einer Unterlage weist ein Befestigungselement (3) und einen an dem Befestigungselement (3) höhenverstellbar montierbaren separaten Haltebügel (2) auf. Der Haltebügel (2) weist einen Montageabschnitt (13) auf, der zum Montieren des Gegenstands eingerichtet ist. Das Befestigungselement (3) weist eine Montageplatte (60) zum Befestigen an der Unterlage auf. Der Haltebügel (2) weist einen Befestigungsabschnitt (10) zum Befestigen an dem Befestigungselement (3) sowie einen Distanzabschnitt (11) und das Befestigungselement weist (3) einen korrespondierend eingerichteten Stützabschnitt (63) zum Stützen des Befestigungsabschnitts (10) auf. Der Distanzabschnitt (11) und der Befestigungsabschnitt (10) gehen über eine im Wesentlichen rechtwinklige Biegung (20) ineinander über. Ein Winkel zwischen dem Befestigungsabschnitt (10) und der Montageplatte (60) ist ein im Wesentlichen rechter Winkel. Der Befestiger (1) weist ferner mindestens eine Verbindungsstütze (101, 102, 103) auf, die zwischen dem Haltebügel (2) und dem Befestigungselement (3) angebracht ist und eine Verbindung zwischen dem Distanzabschnitt (11) des Haltebügels (2) und dem Befestigungselement (3) von unten stützend stabilisiert.

## Beschreibung

Die Erfindung betrifft einen Befestiger und ein Verfahren zum Befestigen eines Gegenstands an einer Unterlage.

Solarfestiger werden beispielsweise eingesetzt, um Solarzellen an einem Hausdach zu befestigen.

Aus dem Stand der Technik sind eine Reihe von Solarbefestigern bekannt, siehe zum Beispiel DE 202009002134 U1, DE 102005043957 B3, DE 202009000960 U1 oder DE 202007015887 U1.

DE 202008016000 U1 offenbart einen geteilt ausgebildeten Dachhaken mit einem Fußteil zur Herstellung einer Verbindung mit einer Dachunterkonstruktion und mit einem mit dem Fußteil verbindbaren Hakenteil, das am anderen Ende über einen Anschluss für die Befestigung eines über der Dachhaut befindlichen Traggerüstes oder einer Baueinheit verfügt. Das Fußteil ist ein abgelängter Abschnitt eines Winkelprofils, dessen einer Winkelschenkel über Anschlüsse zur Herstellung der Verbindung mit der Dachunterkonstruktion verfügt. Die Anschlüsse sind beabstandet vom anderen Winkelschenkel angeordnet. Zwischen den beiden Winkelschenkeln besteht winkelinnenseitig eine in Profillängsrichtung durchgängige Profilwand, die mit dem Winkelschenkelbereich der Anschlüsse einen stumpfen Winkel einschließt, die als Auflagefläche für das Ende des Hakenteils dient und die mit dem Ende des Hakenteils verbindbar ist.

Bei dem aus DE 20 2008 016 000 U1 bekannten Dachhaken kommt es aufgrund des stumpfen Winkels zwischen Winkelschenkel und der Profilwand bei einer Höhenverstellung über das Langloch zu einer Verschiebung der Montageachse und ferner zu einer hohen Belastung am entfernten Ende des Haltebügels, gerade bei zunehmender Verstellung der Höhe, wodurch es zu einer ungewollten Absenkung des Haltebügels auf die Dachziegel kommen kann.

DE 202009001025 U1 offenbart eine Befestigungsvorrichtung für Bauteile, insbesondere für Solarkollektoren, auf einem Dach, bestehend aus einem Dachhaken zur Befestigung des Solarkollektors versehen mit mindestens einem im Wesentlichen senkrecht zur Längsachse des Dachankers auf der dem Dach zugewandten Seite abstehenden Schenkel, der eine Verzahnung aufweist, einem Dachanker zur Befestigung am Dach mit einer U-förmigen Erhebung, die eine Innenverzahnung aufweist und einem Klemmstück, wobei die Verzahnung des Dachhakens in der Verzahnung des Dachankers eingreift und mit dem Klemmstück form- und kraftschlüssig verbunden ist.

DE 202006009674 U1 offenbart einen zweifach höhenverstellbaren Dachhaken, der somit für verschiedene Dachlattenstärken und Ziegeltypen verwendbar ist. Seine unten befindliche breite Grundplatte verleiht dem Dachhalter den notwendigen stabilen Halt auf dem Dachsparren. Durch die veränderbare Position des zweiteiligen Auslegers (rechts, mittig, links) kann der zweiteilige Ausleger den örtlichen Gegebenheiten angepasst werden.

DE 202005004348 U1 offenbart einen Aluminium-Dachhaken mit Clipsfunktion zur Befestigung von Solarmodulen auf Schrägdächern, der aus einer Grundplatte und einem Haken besteht, die bei der Montage der Solarmodule zu einem Dachhaken zusammengefügt werden.

DE 20119478 U1 offenbart einen Montagebügel zur Dachbefestigung von Solarmodulen, wobei der komplette Montagewinkel aus vier Einzelteilen besteht. Eine Grundplatte mit aufgeschweißtem U-Profil (als Lochblechplatte ausgebildet), ein Tragebügel, eine Schlüsselschraube und ein Federspannring. Dadurch soll eine variable Einstellbarkeit des Tragebügels erreicht werden, welcher mit nur einer Schlüsselschraube in der Höhe, entsprechend den Dachziegeln, eingestellt werden kann.

Es ist eine Aufgabe der vorliegenden Erfindung, in benutzerfreundlicher Weise eine stabile Befestigung eines Gegenstands an einer Unterlage zu ermöglichen.

Diese Aufgabe wird durch einen Befestiger und durch ein Verfahren zum Befestigen eines Gegenstands an einer Unterlage mit den Merkmalen gemäß den unabhängigen Patentansprüchen gelöst.

Gemäß einem Ausführungsbeispiel der vorliegenden Erfindung ist ein Befestiger zum Befestigen eines Gegenstands an einer Unterlage bereitgestellt, der ein Befestigungselement und einen an dem Befestigungselement höhenverstellbar montierbaren separaten Haltebügel aufweist. Der Haltebügel weist einen Montageabschnitt auf, der zum Montieren des Gegenstands eingerichtet ist. Das Befestigungselement weist eine Montageplatte zum Befestigen an der Unterlage auf. Der Haltebügel weist einen Befestigungsabschnitt zum Befestigen an dem Befestigungselement und das Befestigungselement weist einen korrespondierend eingerichteten Stützabschnitt zum Stützen des Befestigungsabschnitts auf. Ein Winkel zwischen dem Befestigungsabschnitt und der Montageplatte ist (wenn der Befestigungsabschnitt an dem Stützabschnitt befestigt ist) ein im Wesentlichen rechter Winkel.

Gemäß einem anderen Ausführungsbeispiel der vorliegenden Erfindung ist ein Verfahren zum Befestigen eines Gegenstands an einer Unterlage mittels eines Befestigers geschaffen, wobei bei dem Verfahren eine Montageplatte eines Befestigungselements des Befestigers an der Unterlage befestigt wird. Ferner wird ein Haltebügel des Befestigers an dem separat davon vorgesehenen Befestigungselement höhenverstellbar befestigt, wobei ein Befestigungsabschnitt des Haltebügels an dem Befestigungselement befestigt wird und ein korrespondierend eingerichteter Stützabschnitt des Befestigungselements den Befestigungsabschnitt stützt. Ferner wird der Gegenstand an einem Montageabschnitt des Haltebügels montiert. Ein Winkel zwischen dem Befestigungsabschnitt und der Montageplatte ist ein im Wesentlichen rechter Winkel.

Unter dem Begriff "Winkel zwischen dem Befestigungsabschnitt und der Montageplatte" kann im Rahmen dieser Anmeldung insbesondere ein Winkel verstanden werden, den eine von der Montageplatte definierte erste Ebene (insbesondere die Auflageebene, in der die Montageplatte auf einer planen oder im Wesentlichen planen Unterlage aufliegen kann) mit einer von dem Befestigungsabschnitt definierten zweiten Ebene (insbesondere einem im Wesentlichen planen Bereich des Befestigungsabschnitts, entlang dem der Befestigungsabschnitt im montierten Zustand an dem Stützabschnitt anliegt) einschließt. Der Winkel zwischen dem Befestigungsabschnitt (oder einem planen Bereich davon) und der Montageplatte (oder einem planen Bereich davon) kann gleich oder im Wesentlichen gleich einem Winkel zwischen dem Stützabschnitt (oder einem planen Bereich davon) und der Montageplatte (oder einem planen Bereich davon) sein. Anders ausgedrückt kann der Befestigungsabschnitt parallel zu dem Stützabschnitt und an diesem anliegend angeordnet sein.

Erfindungsgemäß ist ein Befestiger geschaffen, bei dem ein Winkel zwischen dem Befestigungsabschnitt und der Montageplatte genau oder ungefähr 90° betragen kann, womit eine Höhenverstellbarkeit über einen großen Bereich hinweg unter vorteilhafter weitestgehender Beibehaltung der Montageachse erreicht werden kann. Zum Beispiel kann eine Abweichung des Winkels um ±5° von einem rechten Winkel akzeptabel sein. Simultan kann eine stabile Verbindung von Haltebügel und Befestigungselement erreicht werden. Ferner ist aufgrund der aus der Befestigungsgeometrie resultierenden Hebelverhältnisse selbst ein von der Verbindungsstelle entfernt angeordneter Bereich des Haltebügels (zum Beispiel der Montageabschnitt) vor einer starken mechanischen Belastung geschützt, selbst wenn ein schwerer Gegenstand an dem Befestiger befestigt wird. Es kann bei einer zumindest annähernd senkrechten Montage des Haltebügels an dem Befestigungselement die Montageachse ohne Veränderung beibehalten bleiben. Das Aufrechterhalten der Montageachse und ein möglicher Schutz gegen unerwünschtes Absenken des Haltebügels bzw. einer unerwünschten Verschiebung der Montageachse erleichtert die Montage des Befestigers selbst für einen ungeübten Benutzer erheblich.

Im Weiteren werden weitere vorteilhafte Ausgestaltungen des Befestigers beschrieben. Diese gelten auch für das Verfahren.

Gemäß einem Ausführungsbeispiel ist ein Befestiger zum Befestigen eines Gegenstands an einer Unterlage geschaffen, wobei der Befestiger ein Befestigungselement, und einen an dem Befestigungselement höhenverstellbar montierbaren separaten Haltebügel aufweist. Der Haltebügel weist einen Montageabschnitt auf, der zum Montieren des Gegenstands eingerichtet ist. Das Befestigungselement weist eine Montageplatte zum Befestigen an der Unterlage auf. Der Haltebügel weist einen Befestigungsabschnitt zum Befestigen an dem Befestigungselement sowie einen Distanzabschnitt (insbesondere einen im montierten Zustand zu der Montageplatte parallel oder im Wesentlichen parallel verlaufenden Distanzabschnitt) und das Befestigungselement weist einen korrespondierend eingerichteten Stützabschnitt zum Stützen des Befestigungsabschnitts auf. Der Distanzabschnitt geht über eine rechtwinklige (optional an der Biegungskante abgerundete) Biegung oder eine im Wesentlichen rechtwinklige Biegung in den Befestigungsabschnitt über. Ein Winkel zwischen dem Befestigungsabschnitt und der Montageplatte ist ein rechter Winkel oder ein im Wesentlichen rechter Winkel. Der Befestiger weist ferner mindestens eine Verbindungsstütze auf, die zwischen dem Haltebügel und dem Befestigungselement angebracht ist und eine Verbindung zwischen dem Distanzabschnitt des Haltebügels und dem Befestigungselement von unten stützend stabilisiert. Der Begriff "von unten stützend stabilisiert" bezieht sich dabei auf eine bestimmungsgemäß durchgeführte Montage des Befestigungselements an der Unterlage und des Haltebügels an dem Befestigungselement. Bei einer solchen Montage erstreckt sich der Befestigungsabschnitt nach oben hin und der Distanzabschnitt in seitlicher Richtung. Der Distanzabschnitt hat dann eine oberseitige und eine unterseitige Hauptfläche. Die Verbindungsstütze stützt dann den Haltebügel durch einen Berührkontakt mit der unterseitigen Hauptfläche, um zum Beispiel durch die Gravitationskraft bewirkte Lasten zumindest teilweise aufzunehmen. Die Verbindungsstütze kann ein von Befestigungselement und Haltebügel separat vorgesehenes bzw. separat an Befestigungselement und/oder Haltebügel montierbares Bauteil sein.

Die Montageplatte und der Befestigungsabschnitt sind zueinander senkrecht orientiert, wobei bei bestimmungsgemäßer Verwendung die Montageplatte schräg und der Befestigungsabschnitt dazu senkrecht verlaufend angeordnet ist. Somit ist eine intuitive Befestigbarkeit des Haltebügels an dem Befestigungselement ermöglicht. Eine Verschiebung einer Montageachse bei einer Höhenverstellung kann vermieden werden.

Gemäß einem Ausführungsbeispiel kann der Befestiger einen Distanzabschnitt zwischen dem Montageabschnitt und dem Befestigungsabschnitt aufweisen. Dieser Distanzabschnitt kann einen zum Beispiel L-förmigen Querschnitt aufweisen, das heißt als ein Winkelprofil ausgestaltet sein. Der Distanzabschnitt kann zum Beabstanden des Montageabschnitts von dem Befestigungsabschnitt dienen, was den Befestiger für eine Vielzahl von zu befestigenden Gegenständen einsetzbar macht.

Der Montageabschnitt, der Befestigungsabschnitt und der Distanzabschnitt können mittels Biegungen bzw. mittels Biegungsabschnitten ineinander übergehen, die Biegungen eines gemeinsamen Metallblechs darstellen können. Die einzelnen Abschnitte können jeweils im Wesentlichen planar sein. Die Biegungen können rechtwinklig sein. Insbesondere bei Vorsehen rechtwinkliger Biegungsabschnitte kann ein Haltebügel verwendet werden, der platzsparend ausgestaltet und für vielfältige Anwendungen einsetzbar ist.

An zumindest einem der Biegungen oder Biegungsabschnitte kann mindestens eine Verstärkungsrippe angebracht sein. Eine solche Verstärkungsrippe kann zum Beispiel ein Stegelement oder ein Dreieckflächenelement sein, das zwei Schenkel einer Biegung überbrückt. Die Biegungsabschnitte sind im montierten Zustand besonders hohen Kräften ausgesetzt, so dass mittels Vorsehens einer jeweiligen Verstärkungsrippe an einem oder mehreren Biegungsabschnitten eine Verbesserung der Stabilität erreicht werden kann.

Zumindest ein Teil des Haltebügels, vorzugsweise der gesamte Haltebügel, kann einen zentralen Plattenbereich (oder einen plattenartigen Zentralbereich) und zwei beidseitig des zentralen Plattenbereichs angeordnete und gegenüber dem zentralen Plattenbereich abgewinkelte Versteifungskanten aufweisen. Diese dienen der zusätzlichen Stabilisierung des Haltebügels. Der Haltebügel kann bei einer solchen Konfiguration aus einem plattenartigen oder blechartigen Halbzeug hergestellt werden, das mittels Biegens, Stanzens und/oder anderer einfacher Bearbeitungsverfahren hergestellt werden kann. Das Abwinkeln von randseitigen Endabschnitten einer Platte bildet mit geringem Aufwand die Versteifungskanten, welche die Stabilität des Befestigers beim bestimmungsgemäßen Einsatz verbessern.

Der Befestigungsabschnitt kann eine Einrichtung zur höhenverstellbaren Befestigung des Befestigungsabschnitts des Haltebügels an dem Befestigungselement (bzw. an dessen Stützabschnitt) aufweisen. Eine solche Einrichtung oder Struktur kann zum Beispiel ein Langloch oder eine Vielzahl von voneinander beabstandeten Einzellöchern aufweisen. Damit kann der Befestiger für eine Vielzahl von Gegenständen eingesetzt werden, die an einer Unterlage befestigt werden sollen.

Der Befestigungsabschnitt kann ferner mindestens eine, vorzugsweise mehrere, Positioniernoppen zur Positionierung des Befestigungsabschnitts zur Befestigung an dem Befestigungselement aufweisen. Mittels dieser Positioniernoppen kann einem Benutzer intuitiv angezeigt werden, an welcher Stelle der Befestigungsabschnitt relativ zu dem Stützabschnitt des Befestigungselements anzuordnen ist, um eine präzise und fehlerrobuste Montage zu ermöglichen.

Der Montageabschnitt kann ein Langloch zum Aufnehmen einer Befestigungsschraube aufweisen, womit der Gegenstand an dem Montageabschnitt montiert werden kann. Damit kann der Montageabschnitt direkt oder indirekt an den Gegenstand angebracht werden. Alternativ zu einem Langloch sind auch andere Strukturen (zum Beispiel eine oder mehrere Ausnehmungen bzw. eine oder mehrere Überstände) möglich, die mit einem korrespondierenden Element zum Befestigen des Haltebügels an dem Gegenstand dienen können. Auch andere mechanische und nicht-mechanische Befestigungen des Gegenstands sind möglich, zum Beispiel Schnappverschlüsse, Magnetverschlüsse, etc.

Das Befestigungselement kann einen Stabilisierungsabschnitt aufweisen, der derart angeordnet sein kann, dass zwischen dem Stabilisierungsabschnitt und dem Stützabschnitt ein Einsteckabschnitt (zum Beispiel in Form einer dazwischen gebildeten Mulde) zum stabilisierten Einstecken des Befestigungsabschnitts gebildet ist. Bei der Montage kann es hilfreich sein, zum Beispiel mittels Vorsehens eines U-Profils oder dergleichen den Benutzer anzugeben, an welcher Stelle der Befestigungsabschnitt an dem Befestigungselement angebracht werden soll. Ferner kann während des Festziehens von Schrauben oder ähnlicher Tätigkeiten zum Befestigen des Befestigungselements an dem Haltebügel der Einsteckabschnitt dem Befestigungselement zusätzlich Halt geben, um die Montage für den Benutzer einfach zu gestalten.

Der Stabilisierungsabschnitt kann einen verkippt (zum Beispiel senkrecht) zu der Montageplatte verlaufenden ersten Abschnitt und einen unter einem spitzen Winkel zu dem ersten Abschnitt verlaufenden zweiten Abschnitt aufweisen. Dieser spitze Winkel kann zum Beispiel zwischen 30° und 75°, insbesondere zwischen 45° und 65°, betragen und kann zur Verbesserung der Stabilität beitragen. Der zum Beispiel im Wesentlichen senkrecht zu der Montageplatte verlaufende erste Abschnitt kann gemeinsam mit dem Montageabschnitt den dazwischen angeordneten Einsteckabschnitt bilden. Der erste Abschnitt und der zweite Abschnitt können jeweils flächig oder plattenartig ausgebildet sein.

Der erste Abschnitt des Stabilisierungsabschnitts kann dem Stützabschnitt zugewandt sein, wohingegen der zweite Abschnitt des Stabilisierungsabschnitts dem Stützabschnitt abgewandt sein kann. Die winkelige Anordnung des zweiten Abschnitts kann zum Verbessern der Stabilität beitragen, wenn der Befestiger zusammengesetzt und an der Unterlage montiert sowie der Gegenstand auf dem Befestiger montiert ist.

Der zweite Abschnitt kann mindestens ein Versteifungselement zum Stabilisieren des Stabilisierungsabschnitts aufweisen. Der erste Abschnitt dient somit zum Definieren des Einsteckabschnitts. Der zweite Abschnitt kann durch das Vorsehen von Versteifungssicken oder dergleichen als Versteifungselemente die mechanische Stabilität des Befestigers weiter erhöhen. Die Versteifungselemente können an einer Oberfläche des zweiten Abschnitts angebracht oder gebildet sein, die dem ersten Abschnitt abgewandt ist.

Die Montageplatte kann eine oder mehrere Befestigungsbohrungen zum Befestigen an der Unterlage aufweisen. Diese eine oder mehrere Befestigungsbohrungen können in einem plattenförmigen Abschnitt der Montageplatte als Durchgangslöcher vorgesehen sein, um zum Beispiel eine Schraub- oder Nietverbindung an einer beliebigen Unterlage wie zum Beispiel einer Dachfläche zu ermöglichen.

Die Montageplatte kann zum Stabilisieren mindestens ein Versteifungselement aufweisen. Das Vorsehen eines solchen Versteifungselements an der Montageplatte erhöht deren mechanische Robustheit. Zum Beispiel können Versteifungssicken vorgesehen sein, die zwischen benachbarten Befestigungsbohrungen verlaufend angeordnet sein können. Dadurch kann im befestigten Zustand des Befestigers dessen Stabilität und Lastaufnahmefähigkeit weiter verbessert werden.

Gemäß einem bevorzugten Ausführungsbeispiel kann der Befestiger eine Verbindungsstütze aufweisen, die zwischen dem Haltebügel und dem Befestigungselement angebracht ist (bzw. lösbar anbringbar sein kann) und eine Verbindung zwischen dem Haltebügel und dem Befestigungselement stützend stabilisiert. Mittels Vorsehens einer solchen Verbindungsstütze kann die Verbindung von Haltebügel und Befestigungselement weiter stabilisiert werden, insbesondere zum Aushalten hoher Dauerlasten, wie sie bei Anbringen großflächiger Solarpaneele an dem Befestiger zur Montage auf einem Dach auftreten können. Zu diesem Zweck kann die Verbindungsstütze zwischen Haltebügel und Befestigungselement zum Beispiel als eine verstellbare Stützschraube, als eine Stützplatte oder als ein Stützkeil realisiert werden, wie unten näher beschrieben wird. Mittels Vorsehens einer solchen oder einer ähnlichen Verbindungsstütze kann eine Stabilitätserhöhung der Verbindung zwischen Haltebügel und Befestigungselement erreicht werden.

Gemäß einem Ausführungsbeispiel kann der Stützabschnitt des Befestigungselements einen Arretierabschnitt zum Arretieren des Befestigungsabschnitts des Haltebügels aufweisen. Zu diesem Zweck kann eines oder können mehrere Arretierelemente an dem Arretierabschnitt vorgesehen sein.

Gemäß einem bevorzugten Ausführungsbeispiel weist der Stützabschnitt ein Rechteckprofil auf, das in den Arretierabschnitt übergeht. Ein solches Rechteckprofil kann zum Beispiel mittels eines Blechs realisiert werden, das einstückig und einstoffig mit dem Arretierabschnitt vorgesehen sein kann, und das durch bloßes Abbiegen oder Abkanten im Querschnitt eine rechteckförmige, insbesondere quadratische Form, aufweisen kann. Ein solches Rechteckprofil kann Stabilität und Gleichgewicht des Befestigers verbessern.

Der Arretierabschnitt kann auf Höhe des Rechteckprofils mindestens eine Arretierbohrung zum Arretieren des Befestigungsabschnitts aufweisen. Unter dem Begriff "auf Höhe des Rechteckprofils" ist zu verstehen, dass in einem vertikalen Übergangsbereich zwischen Rechteckprofil und Arretierabschnitt die Arretierbohrung angebracht werden kann. Durch die Arretierbohrung kann eine Arretierschraube im Wesentlichen horizontal hindurchgeführt werden, zum Beispiel um eine im Wesentlichen senkrecht zu der Arretierschraube angeordnete Stützschraube seitlich zu arretieren. Die Stützschraube kann ebenfalls durch das Rechteckprofil hindurchgeführt werden, zum Beispiel von unten nach oben. Dann kann ein oberer Endabschnitt der Stützschraube eine Unterseite des Haltebügels stützen, wohingegen die Arretierschraube horizontal durch Bohrungen in Befestigungsabschnitt und Arretierabschnitt hindurchgeführt werden kann.

Der Arretierabschnitt kann mindestens eine Positionieraussparung aufweisen, die zum Ineingriffnehmen mittels der mindestens einen Positioniernoppe des Befestigungsabschnittes angeordnet sein kann. Die Positionieraussparung(en) kann/können unterhalb der Arretierbohrung angeordnet sein. Wenn der Befestigungsabschnitt an dem Arretierabschnitt arretiert wird, kann somit eine Positioniernoppe des Befestigungsabschnitts mit einer korrespondierenden Positionieraussparung des Arretierabschnitts räumlich zusammenfallen, womit einem Benutzer eine gute Hilfestellung gegeben ist, die Montage fehlerfrei und präzise durchzuführen. Alternativ zu dem beschriebenen Ausführungsbeispiel kann der Arretierabschnitt mindestens eine Positioniernoppe aufweisen, und der Befestigungsabschnitt mindestens eine korrespondierende Positionieraussparung aufweisen.

Jede der mindestens einen Positionieraussparung kann eine Mehrzahl von Eingriffsabschnitten aufweisen, von denen jeder zum Ineingriffnehmen der mindestens einen Positioniernoppe eingerichtet sein kann. Die Eingriffsabschnitte können miteinander verbunden sein, um eine gemeinsame Öffnung zu bilden. Zum Beispiel können Aussparungen mit mehreren, zum Beispiel drei oder fünf Höhenstufen, vorgesehen werden. Eine Positioniernoppe kann formschlüssig in jede der Aussparungen eingreifen und diese fixieren.

Gemäß einem bevorzugten Ausführungsbeispiel können zwei vertikal gegenüberliegende Flächen des Rechteckprofils jeweils mindestens eine Stützaussparung aufweisen. Zwei gegenüberliegende Stützaussparungen können jeweils zum Aufnehmen einer Stützschraube als Verbindungsstütze zum Stützen des Haltebügels relativ zu dem Befestigungselement eingerichtet sein.

Gemäß einem anderen Ausführungsbeispiel kann der Befestiger ein Fußteil aufweisen, das dem Arretierabschnitt - zum Beispiel symmetrisch - gegenüberliegend angeordnet sein kann und gemeinsam mit dem Arretierabschnitt und der Montageplatte zum Aufliegen auf der Unterlage positioniert sein kann. Dieses Fußteil kann zum Beispiel eine Form aufweisen, die zu der Form des Arretierabschnitts im Wesentlichen spiegelsymmetrisch ist. Gemeinsam können Fußteil und Arretierabschnitt im Querschnitt im Wesentlichen eine U-Form bilden, bei der an den beiden Enden des "U" eine Abkantung gebildet sein kann, um eine gute Stabilisierungswirkung bereitzustellen.

Gemäß einem solchen Ausführungsbeispiel kann eine Stützplatte als die Verbindungsstütze vorgesehen sein, wobei die Stützplatte an dem Fußteil anbringbar und zur Stabilisierung des Haltebügels relativ zu dem Befestigungselement eingerichtet sein kann.

Vorteilhaft kann die Stützplatte als Winkelprofil ausgebildet sein, das heißt im Querschnitt im Wesentlichen L-förmig. Ein Schenkel dieses L-förmigen Winkelprofils kann an dem Fußteil angebracht sein, wohingegen der andere Schenkel den Haltebügel von unten her stützen kann.

Die Stützplatte kann mindestens eine Positioniernoppe aufweisen. Vorzugsweise sind mehrere Positioniernoppen vorgesehen. Diese erleichtern wiederum eine Positionierung der Stützplatte relativ zu dem Fußteil. Folglich kann auch das Fußteil mindestens eine Positionieraussparung aufweisen, die zum Ineingriffnehmen der mindestens einen Positioniernoppe der Stützplatte ausgebildet sein kann. Alternativ zu diesem Ausführungsbeispiel kann die Stützplatte mindestens eine Positionieraussparung und kann das Fußteil mindestens eine Positioniernoppe aufweisen. Diese Maßnahmen erlauben wiederum eine präzise und fehlerfreie Positionierung von Stützplatte und Fußteil relativ zueinander.

Vorzugsweise enthält die Positionieraussparung eine Mehrzahl von Eingriffsabschnitten, von denen jede zum Ineingriffnehmen mittels der mindestens einen Positioniernoppe eingerichtet sein kann. Somit können wieder unterschiedliche Höhenstufen definiert werden, was die Benutzerfreundlichkeit des Befestigers erhöht.

Die Stützplatte kann ein Langloch aufweisen, wobei mittels Hindurchführens einer Befestigungsschraube durch das Langloch und in die Stützplatte hinein die Stützplatte an dem Fußteil befestigbar ist. Dies kann an einer oder mehreren Höhenstufen erfolgen. Anstelle eines Langlochs ist auch jede andere Fixiereinrichtung möglich, die ein Fixieren von Stützplatte und Fußteil herbeiführen kann.

Der Befestiger kann gemäß einem alternativen Ausführungsbeispiel einen Stützkeil als die Verbindungsstütze aufweisen. Unter einem Keil kann ein konisch zulaufender Körper verstanden werden. Der Stützkeil kann an mindestens einer Auflageaussparung an einem Arretierabschnitt und/oder an einem Fußteil des Befestigers anbringbar sein und zur Stabilisierung des Haltebügels relativ zu dem Befestigungselement eingerichtet sein. Anschaulich überbrückt der Stützkeil einen Abstand zwischen Arretierabschnitt/Fußteil einerseits und dem Haltebügel andererseits.

Der Stützkeil kann eine Bohrung aufweisen, mittels welcher unter Verwendung einer Befestigungsschraube der Stützkeil an dem Haltebügel befestigbar ist. Eine solche Bohrung durch den Stützkeil kann zum Beispiel ein Innengewinde aufweisen. Dann ist es etwa möglich, durch diese Bohrung die Befestigungsschraube hindurchzuführen und an einer weiteren Bohrung an dem Haltebügel oder dem Befestigungselement zu verankern.

Gemäß einem Ausführungsbeispiel kann der Stützkeil eine konstante Steigung aufweisen. Dann kann der Stützkeil eine prismatische Form aufweisen. Alternativ kann der Stützkeil treppenförmig abgestuft eingerichtet sein, womit eine Mehrzahl von Stufen gebildet werden kann.

Der Haltebügel kann einstückig oder einstoffig gebildet sein. Auch das Befestigungselement kann einstückig oder einstoffig sein. Es ist möglich, dass Haltebügel und Befestigungselement aus demselben oder aus unterschiedlichen Materialien hergestellt werden. Zum Beispiel kann das Befestigungselement als verzinktes Blech und der Haltebügel in Edelstahl ausgeführt werden.

Der Befestigungsabschnitt kann eine dem Montageabschnitt zugewandte Fläche und eine dem Montageabschnitt abgewandte Fläche aufweisen. Diese Flächen können die beiden gegenüberliegenden Hauptflächen eines im Wesentlichen plattenförmigen Befestigungsabschnitts sein. Der Befestigungsabschnitt kann mit der dem Montageabschnitt des Haltebügels zugewandten Fläche an dem Stützabschnitt anliegen. Mit einer solchen Montagegeometrie kann eine Unterseite eines Distanzabschnitts in enge räumliche Nähe des Stützabschnitts gebracht werden, womit eine Grundlage für ein platzsparendes Anbringen einer Verbindungsstütze gelegt ist.

Gemäß einem bevorzugten Ausführungsbeispiel der Erfindung wird der Befestiger als Solarbefestiger eingesetzt. Somit kann der Befestiger ein Solarmodul, insbesondere eine Photovoltaikanlage oder ein Solarkollektor, auf einem Dach eines Hauses befestigen.

Im Folgenden werden exemplarische Ausführungsbeispiele der vorliegenden Erfindung mit Verweis auf die folgenden Figuren detailliert beschrieben.
Fig. 1 bis Fig. 7 zeigen unterschiedliche Ansichten eines Haltebügels und eines zugehörigen Befestigungselements, die gemeinsam einen Befestiger gemäß einem ersten exemplarischen Ausführungsbeispiel der Erfindung bilden.
Fig. 8 und Fig. 9 zeigen einen Befestiger gemäß einem zweiten Ausführungsbeispiel in unterschiedlichen Betriebszuständen.
Fig. 10 bis Fig. 15 zeigen unterschiedliche Ansichten und Betriebszustände eines Befestigers gemäß einem dritten Ausführungsbeispiel der Erfindung.

Gleiche oder ähnliche Komponenten in unterschiedlichen Figuren sind mit gleichen Bezugsziffern versehen.

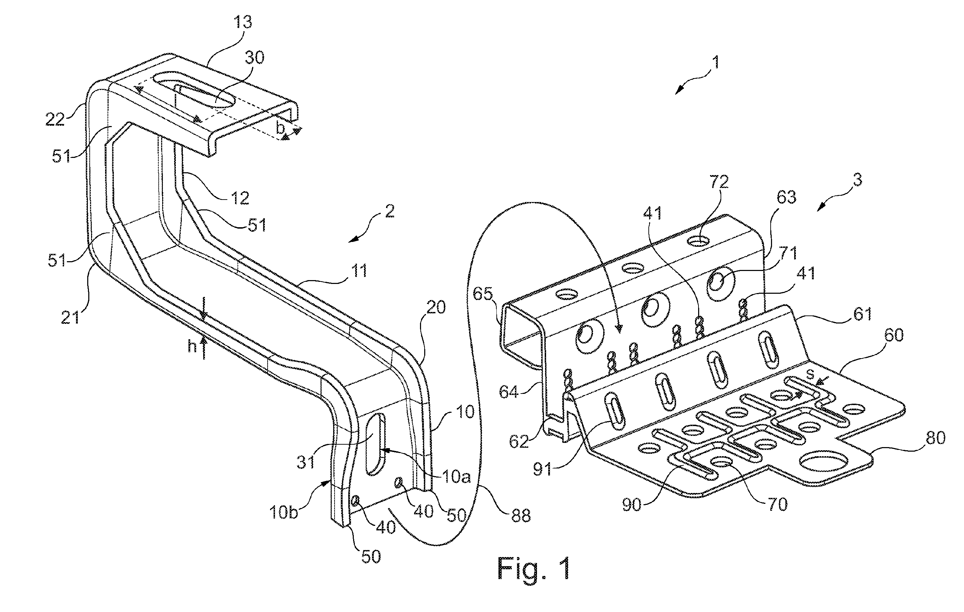

Im Weiteren wird bezugnehmend auf Fig. 1 bis Fig. 7 ein Befestiger 1 gemäß einem ersten exemplarischen Ausführungsbeispiel der Erfindung beschrieben. Der Befestiger 1 dient als Solarbefestiger zum Befestigen von in der Figur nicht gezeigten Photovoltaikmodulen an einem Dach eines Hauses.

In Fig. 1 sind Komponenten eines Befestigers 1 in einem demontierten Zustand gezeigt, in dem ein Haltebügel 2 separat von einem Befestigungselement 3 gezeigt ist. Wie im Weiteren näher beschrieben wird, ist der Haltebügel 2 an dem Befestigungselement 3 montierbar, um ein Solarmodul an einem Dach zu befestigen.

Der Haltebügel 2 weist einen Montageabschnitt 13 auf, der zum Montieren des Photovoltaikmoduls eingerichtet ist. Korrespondierend weist das Befestigungselement 3 eine Montageplatte 60 zum Befestigen an dem Dach des Hauses auf. Der Haltebügel 2 hat einen Befestigungsabschnitt 10 zum Befestigen an dem Befestigungselement 3. Korrespondierend weist das Befestigungselement 3 einen entsprechend eingerichteten Stützabschnitt 63 auf, der zum Stützen des Befestigungsabschnitts 10 dient, wenn der Befestigungsabschnitt 10 an dem Stützabschnitt 63 angebracht ist (letzteres wird in Fig. 1 schematisch durch einen Pfeil 88 gezeigt).

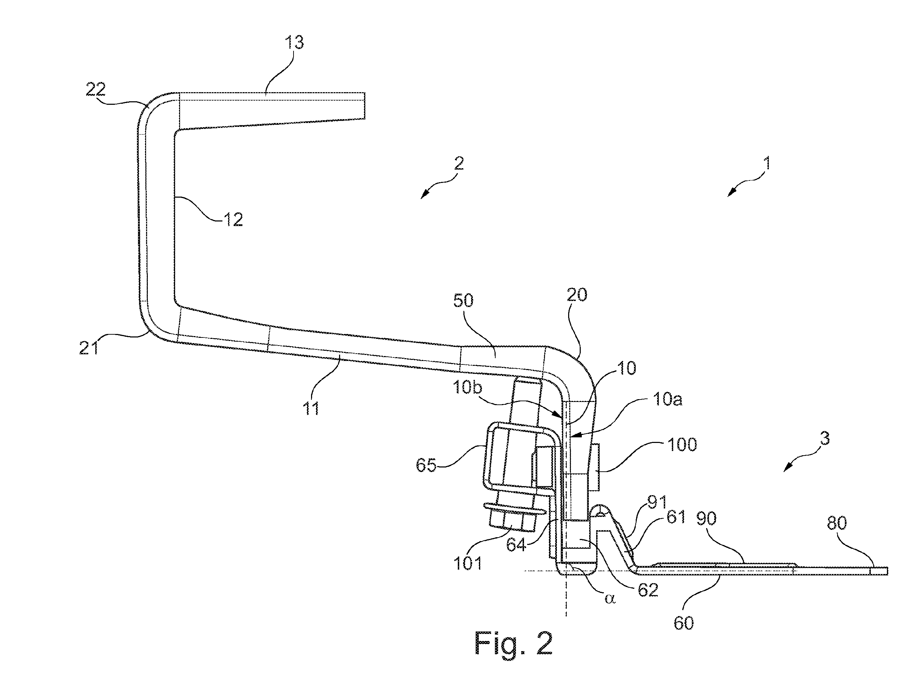

Fig. 1 zeigt, dass der Befestigungsabschnitt 10 eine dem Montageabschnitt 13 zugewandte Hauptoberfläche 10b und eine dem Montageabschnitt 13 abgewandte Hauptoberfläche 10a aufweist. Der Befestigungsabschnitt 10 liegt mit der dem Montageabschnitt 13 zugewandten Fläche 10b an dem Stützabschnitt 63 an (siehe Fig. 2).

Erfindungsgemäß beträgt, wie in Fig. 2 gezeigt, ein Winkel a, den der Befestigungsabschnitt 10 und die Montageplatte 60 im montierten Zustand des Befestigers 1 miteinander einschließen, 90°. Somit schließen eine Hauptverlaufsrichtung des Befestigungsabschnitt 10 (gestrichelte vertikale Linie gemäß Fig. 2) und eine Hauptverlaufsrichtung der Montageplatte 60 (gestrichelte horizontale Linie gemäß Fig. 2) miteinander einen rechten Winkel ein. Unter einer Hauptverlaufsrichtung wird dabei eine wesentliche Erstreckungsrichtung verstanden, von der nur strukturell kleinere Merkmale des

Befestigungsabschnitts 10 bzw. der Montageplatte 60 abweichen. Eine Höhenverstellung, das heißt ein vertikales Verschieben des Befestigungsabschnitts 10 bei festgehaltener Montageplatte 60, verschiebt daher die Montageachse in gemäß Fig. 2 horizontaler Richtung nicht. In anderen Ausführungsbeispielen muss der Winkel a nicht exakt 90° betragen, sondern kann zum Beispiel zwischen 75° und 105° betragen. Wichtig ist, dass der Winkel α ausreichend wenig von einem rechten Winkel abweicht, um eine im Wesentlichen senkrechte Montage des Haltebügels 2 an dem Befestigungselement 3 zu ermöglichen, so dass selbst bei Vornahme einer Höhenverstellung die Montageachse zumindest weitgehend beibehalten werden kann.

Wie in Fig. 1 weiter gezeigt ist, weist der Haltebügel 2 angrenzend an den im Wesentlichen vertikalen Befestigungsabschnitt 10 einen horizontalen Distanzabschnitt 11 sowie einen vertikalen Distanzabschnitt 12 auf. Der horizontale Distanzabschnitt 11 und der vertikale Distanzabschnitt 12 überbrücken anschaulich einen horizontalen bzw. einen vertikalen Abstand zwischen dem Befestigungsabschnitt 10 und dem Montageabschnitt 13 und dienen daher als Überbrückungsabschnitte. Der Befestigungsabschnitt 10, der horizontale Distanzabschnitt 11, der vertikale Distanzabschnitt 12 und der Montageabschnitt 13 gehen über jeweils im Wesentlichen rechtwinklige Biegungen 20, 21 und 22 ineinander über. Der Haltebügel 2 kann aus einem Metallblech gefertigt werden, der entsprechend gebogen, gestanzt, gefräst, etc. wird.

Ferner sind bei dem Haltebügel 2 zwei bei einem Pressvorgang abgekantete und über die gesamte Länge des Haltebügels 2 verlaufende laterale Versteifungskanten 50 zur Erhöhung der Stabilität gebildet. Diese können zum Beispiel eine Höhe h von ca. 2 mm haben. Ferner sind in Fig.1 schematisch Verstärkungsrippen 51 gezeigt, die seitlich in den Innenseiten der Biegeabschnitte 22, 21 gebildet sein können, um die Stabilität des Haltebügels 2 zu erhöhen.

Der Befestigungsabschnitt 10 des Haltebügels 2 enthält ein Langloch 31, durch das eine Befestigungsschraube (nicht gezeigt) hindurch geführt werden kann. Diese dient der Befestigung des Haltebügels 2 an dem Befestigungselement 3. Ferner sind in Fig. 1 zwei Positioniernoppen 40 an dem Befestigungsabschnitt 10 gezeigt, die in Richtung des vertikalen Distanzabschnitts 12 vorstehen, nebeneinander angeordnet sind und zum Beispiel beim Pressen des Haltebügels 2 mit ausgebildet werden können. Die Positioniernoppen 40 können zum Beispiel ungefähr 0,5 cm in Richtung des vertikalen Distanzabschnitts 12 vorstehen.

Der Montageabschnitt 13 enthält ein Langloch 30 zum Aufnehmen einer Befestigungsschraube (nicht gezeigt) zur Fixierung des Solaranlagenmoduls (nicht gezeigt). Eine solche Fixierung kann direkt oder indirekt (über ein Befestigungsprofil) erfolgen. In dem in Fig. 1 gezeigten Ausführungsbeispiel hat das Langloch 30 eine Länge l von 4 cm und eine Breite b von 1 cm.

Das Befestigungselement 3 weist abgesehen von der Montageplatte 60 (die auch als Dachabschnitt bezeichnet werden kann, da sie am Dach befestigt werden kann) einen Stabilisierungsabschnitt 61, einen Stützabschnitt 63 und einen zwischen dem Stabilisierungsabschnitt 61 und dem Stützabschnitt 63 gebildeten Einsteckabschnitt 62 auf. All diese Komponenten werden beim Pressen des Befestigungselements 3 aus einem Materialstück gebildet.

Die Montageplatte 60 weist acht Befestigungsbohrungen 70 zur Aufnahme von Befestigungsschrauben (nicht gezeigt) auf, mit welchen der Solarbefestiger 1 am Dach (nicht gezeigt), insbesondere an unter dem Solarbefestiger 1 liegenden Dachlatten (nicht gezeigt), befestigt werden kann. In einem Endabschnitt der Montageplatte 60 ist eine Befestigungslasche 80 gebildet, über die der Solarbefestiger 1 mit einer Schraube (nicht gezeigt) an einer Dachunterkonstruktion (nicht gezeigt) befestigt werden kann. Die Befestigungslasche 80 kann zum Beispiel um 45° nach oben geneigt sein oder kann in der Ebene der Montageplatte 60 liegen. Gemäß einem Ausführungsbeispiel kann die Schraube unter einem spitzen Winkel eingeschraubt werden. Zwischen benachbarten Bohrungen 70 und seitlich angrenzend an zwei äußere der Bohrungen 70 verlaufen eingepresste Versteifungssicken 90. Diese können zum Beispiel eine Breite s von 2 mm aufweisen und können ebenfalls eine Tiefe von ungefähr 2 mm aufweisen.

Der Stützabschnitt 63 enthält einen zum Beispiel lotrecht oder im Wesentlichen lotrecht zur Ebene der Montageplatte 60 verlaufenden Arretierabschnitt 64, welcher an seinem dem Haltebügel 2 zugewandten Ende in ein Rechteckprofil 65 übergeht. In dem Arretierabschnitt 64 sind drei Bohrungen 71 vorgesehen, welche auf der Höhe des dahinterliegenden Rechteckprofils 65 angeordnet sind und zur Fixierung des Haltebügels 2 in drei möglichen Positionen unter Verwendung einer selbstbohrenden Schraube 100 (siehe Fig. 2) dienen. Die Schraube 100 kann zum Beispiel als Befestigungs- oder Fixierschraube bezeichnet werden. Ferner sind drei unter den Bohrungen 71 liegende Aussparungspaare 41 mit jeweils fünf Höhenstufen gebildet, die zum formschlüssigen Eingriff der Positioniernoppen 40 des Haltebügels 2 dienen, wenn dessen Befestigungsabschnitt 10 in dem Einsteckabschnitt 63 eingesteckt sind.

Drei Bohrungen 72 sind auf der Ober- und Unterseite des Rechteckprofils 65 gebildet, welche entsprechend der Positionen der Bohrungen 71 in der Längsseite angeordnet sind. Dadurch ist es ermöglicht, in jeweils zwei gegenüberliegende Bohrungen 72 eine Stützschraube 101 einzuschrauben, welche der Stützung des Haltebügels 2 von unten dient (siehe Fig. 2).

Der Einsteckabschnitt 62 enthält einen der Breite des Befestigungsabschnitts 10 entsprechenden Ausschnitt, in welchen das gegenüber dem Biegeabschnitt liegende Ende des Befestigungsabschnitts 10 senkrecht oder im Wesentlichen senkrecht zur Montageplatte 60 bis zum Boden gesteckt werden kann, wodurch der Haltebügel 2 während der Montage zusätzlich formschlüssig gehalten werden kann.

Gemäß dem beschriebenen Ausführungsbeispiel kann das Befestigungselement 3 in verzinktem Blech ausgeführt werden. Der Haltebügel 2 kann zum Beispiel in Edelstahl ausgeführt werden.

Fig. 2 zeigt eine Seitenansicht des Befestigers 1. Die optionalen Verstärkungsrippen 51 sind in Fig. 2 nicht gezeigt.

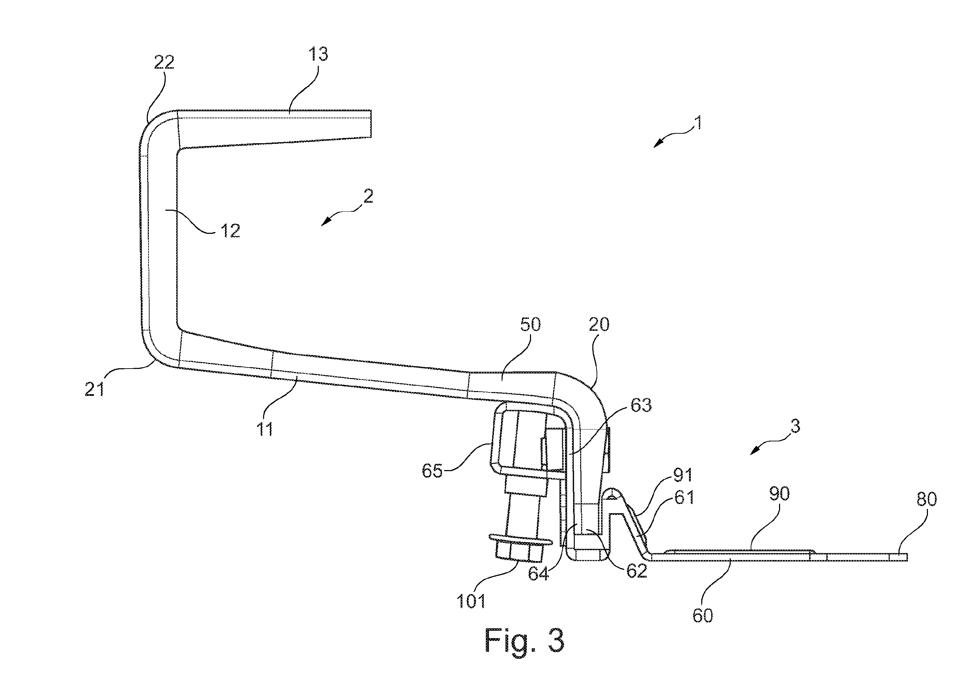

**Fig. 3** zeigt den Solarbefestiger 1 in einem Betriebszustand, in dem die Stützschraube 101 teilweise eingeschraubt ist. Je nachdem, wieweit die Stützschraube 101 eingedreht ist, wird der Haltebügel 2 gestützt.

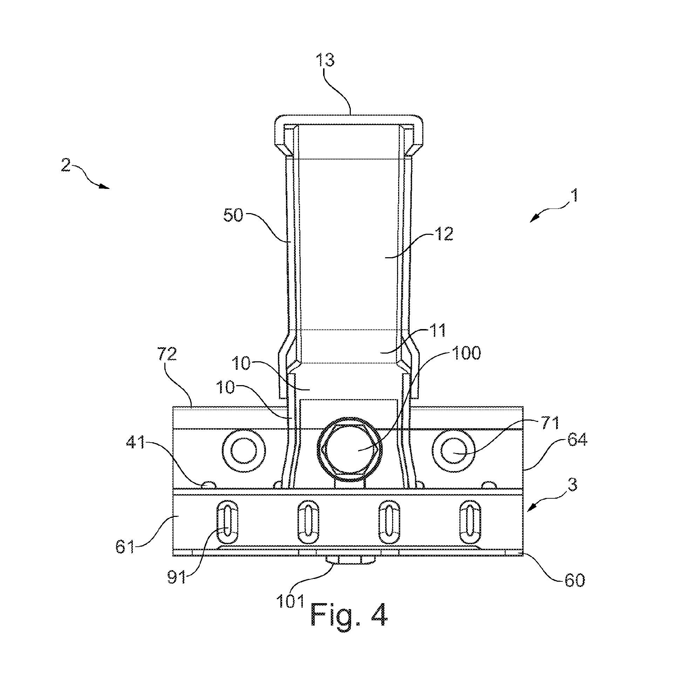

**Fig. 4** zeigt eine Seitenansicht des Befestigungselements 1 gemäß Fig. 1 bis Fig. 3.

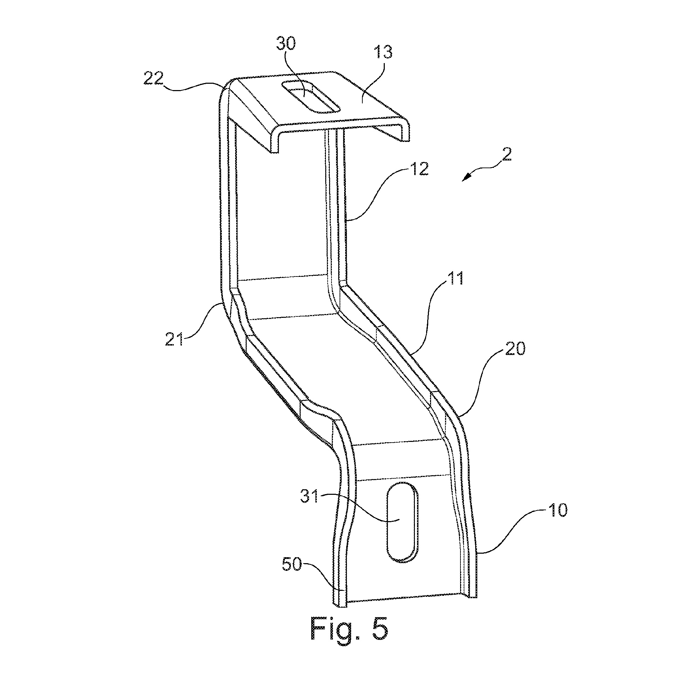

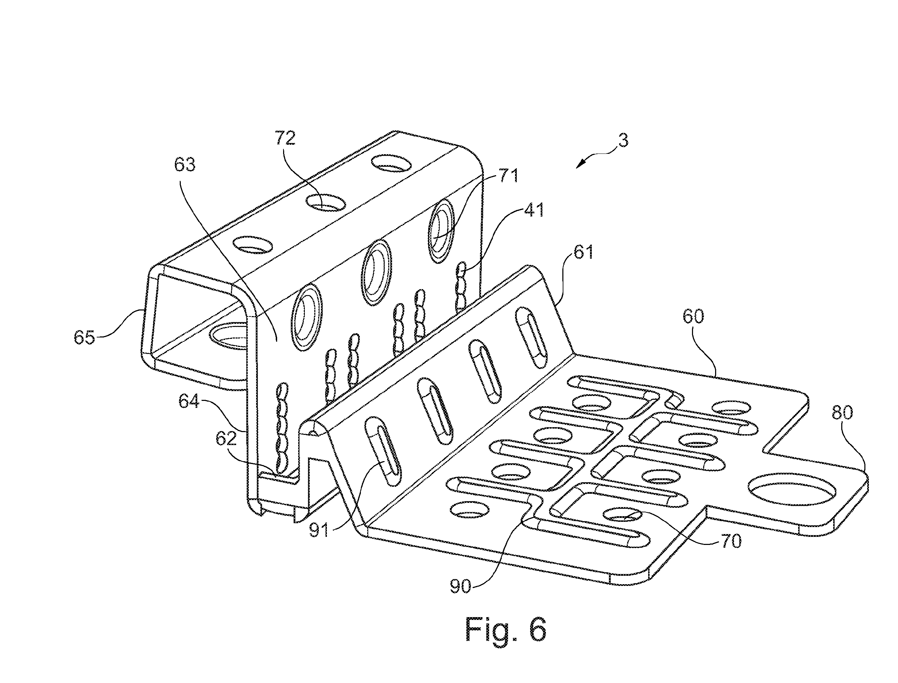

**Fig. 5** zeigt eine räumliche Ansicht eines Teils des Haltebügels 2. **Fig. 6** zeigt eine räumliche Ansicht des Befestigungselements 3 des Solarbefestigers 1 gemäß Fig. 1.

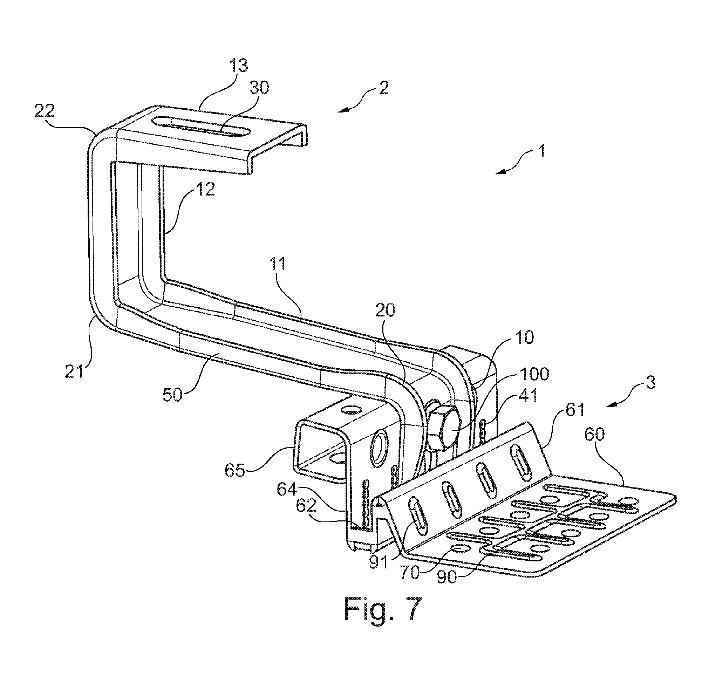

**Fig. 7** zeigt eine räumliche Ansicht des Solarbefestigers 1, bei dem Haltebügel 2 und Befestigungselement 3 zusammengesetzt sind. Gemäß Fig. 7 ist weder eine Lasche 80 noch sind Verstärkungsrippen 51 vorgesehen.

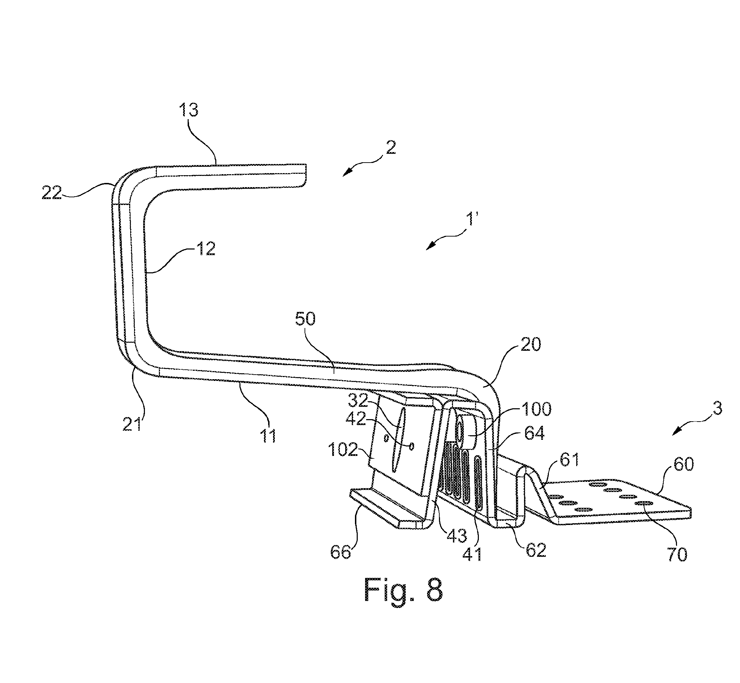

**Fig. 8** zeigt einen Solarbefestiger 1' gemäß einem zweiten Ausführungsbeispiel der Erfindung, bei dem wiederum ein Haltebügel 2 und ein Befestigungselement 3 aneinander befestigbar sind. Viele der Ausgestaltungen des Ausführungsbeispiels gemäß Fig. 1 bis Fig. 7 können auch bei dem in Fig. 8 und

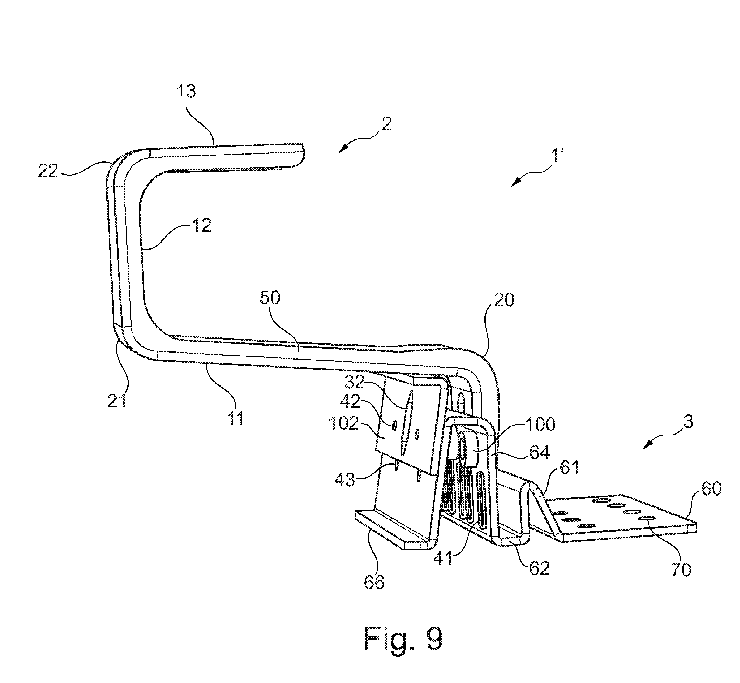

Fig. 9 gezeigten Solarbefestiger 1' zum Einsatz kommen. Im Weiteren werden daher im Wesentlichen Hauptunterschiede zwischen diesen beiden Ausführungsbeispielen des Solarbefestigers 1 und 1' beschrieben.

Ein Hauptunterschied zwischen dem Solarbefestiger 1' gegenüber dem Solarbefestiger 1 ist, dass bei dem Solarbefestiger 1' anstelle eines Rechteckprofils 65 mit Stützschraube 101 zur Stabilisierung des Haltebügels 2 eine Stützplatte 102 vorgesehen ist. Bei diesem Ausführungsbeispiel ist an dem dem Haltebügel 2 zugewandten Ende des Arretierabschnitts 64 kein Rechteckprofil 65 gebildet, sondern ein der Form des Arretierabschnitts 64 entsprechendes Fußteil 66. Die Stützplatte 102 weist, korrespondierend zu dem Befestigungsabschnitt 10, zwei Positioniernoppen 42 und ein Langloch 32 auf. Das Fußteil 66 weist, identisch zum Arretierabschnitt 64, Aussparungspaare 43 mit fünf Höhenstufen auf, in welche die Positioniernoppen 42 der Stützplatte 102 formschlüssig eingreifen können und diese fixieren können. Eine sichere Befestigung der Stützplatte 102 am Fußteil 66, in der jeweiligen Höhenposition, wird mittels einer selbstbohrenden Befestigungsschraube durch das Langloch 32 in das Fußteil 66 erreicht.

Fig. 8 und Fig. 9 zeigen die Stützplatte 102 in unterschiedlichen Höhenstufen. Anders ausgedrückt, ist die Stützplatte 102 höhenverstellbar, wobei in Fig. 8 die Stützplatte 102 unten und in **Fig. 9** oben positioniert ist, um den Haltebügel 102 zu stützen.

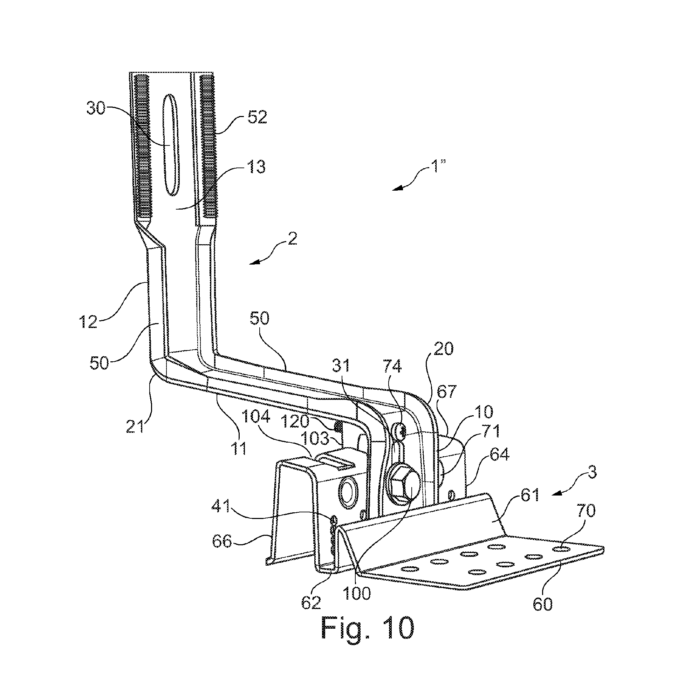

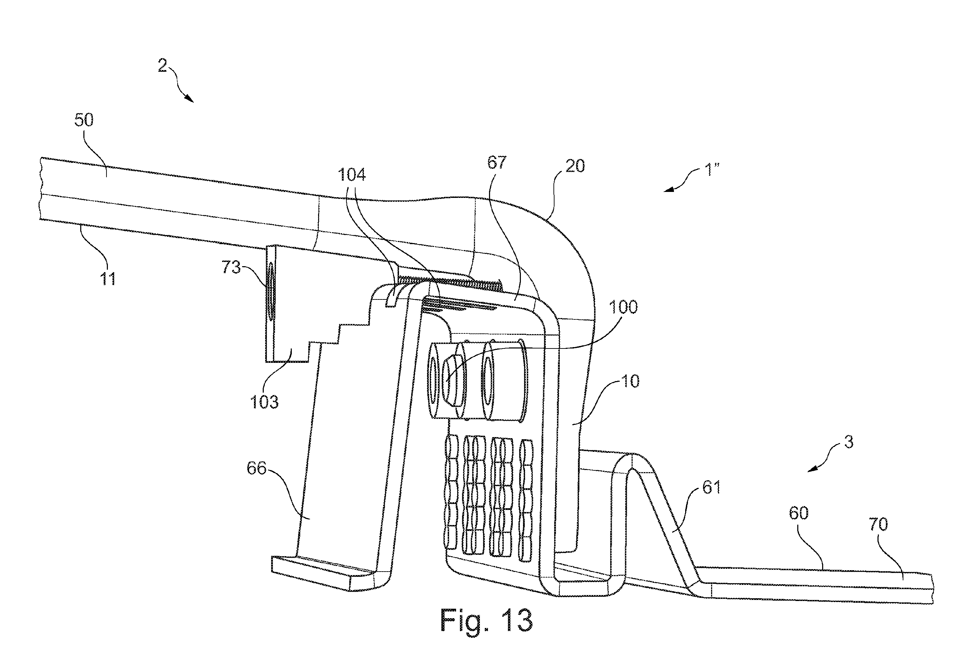

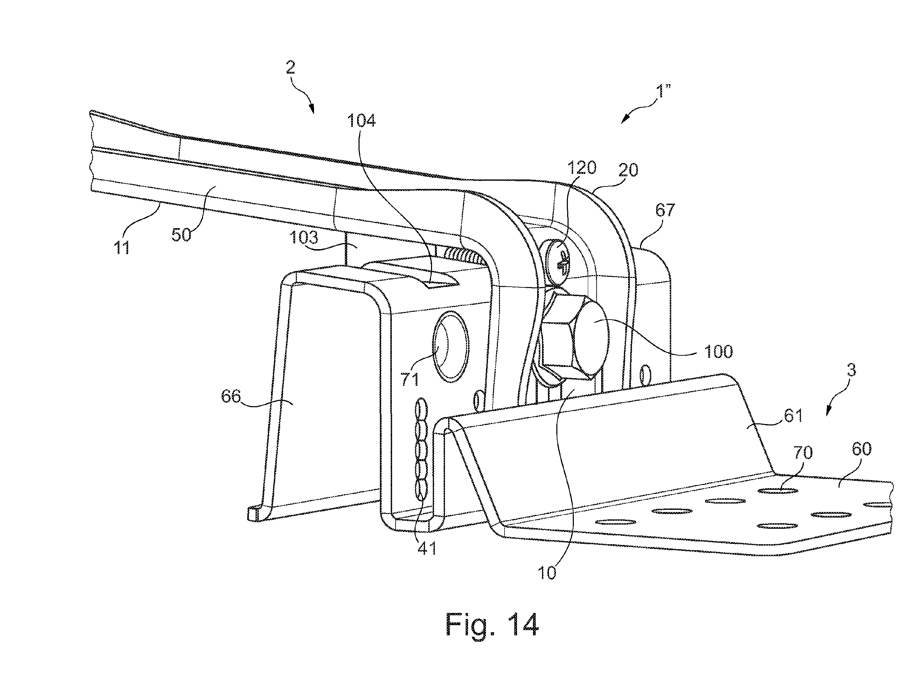

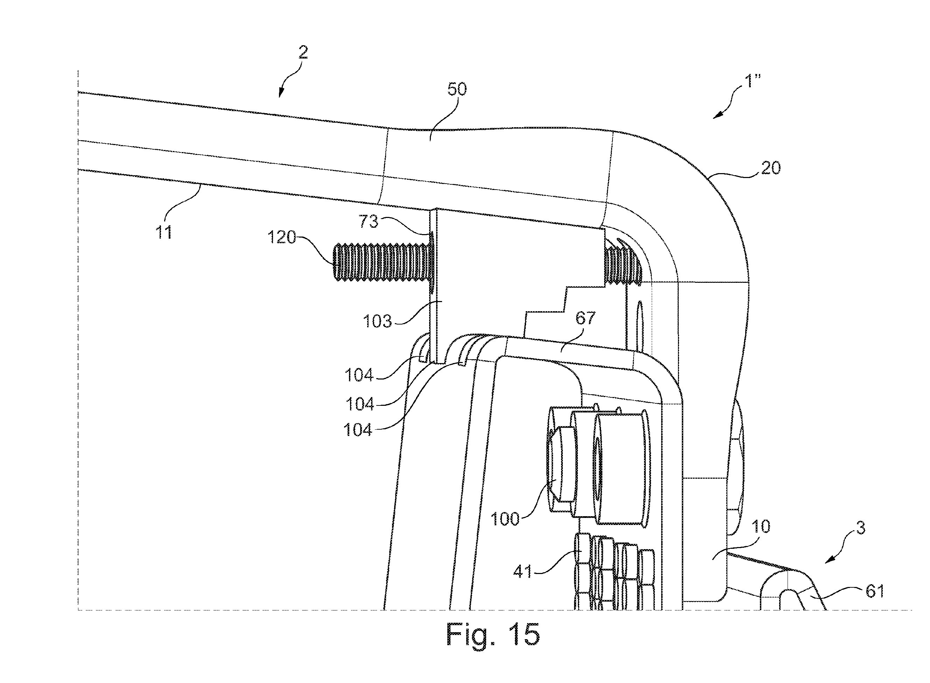

Im Weiteren wird bezugnehmend auf Fig. 10 bis Fig. 15 ein Solarbefestiger 1" gemäß einem dritten Ausführungsbeispiel der Erfindung beschrieben.

Wie in **Fig. 10** gezeigt, ist auch der Solarbefestiger 1" aus einem Haltebügel 2 und einem Befestigungselement 3 zusammengesetzt, die separat voneinander vorgesehen und aneinander montierbar sind. Im Weiteren werden wesentliche Unterschiede zu den zuvor beschriebenen Ausführungsbeispielen beschrieben. Anstelle eines Rechteckprofils 65 mit Stützschraube 101 zur Stabilisierung des Haltebügels 2 ist bei dem Ausführungsbeispiel des Solarbefestigers 1" ein Stützkeil 103 vorgesehen. An dem dem Haltebügel 2 zugewandten Ende des Arretierabschnitts 64 ist somit kein Reckeckprofil 65, sondern ein der Form des Arretierabschnitts 64 entsprechendes Fußteil 66 gebildet. An einem im Wesentlichen waagerecht und parallel zur Montageplatte 60 verlaufenden Auflageabschnitt 67 sind jeweils oberhalb der Bohrungen 71 des Arretierabschnitts 64 in Richtung des Haltebügels 2 verlaufende Auflageaussparungen 104 gebildet.

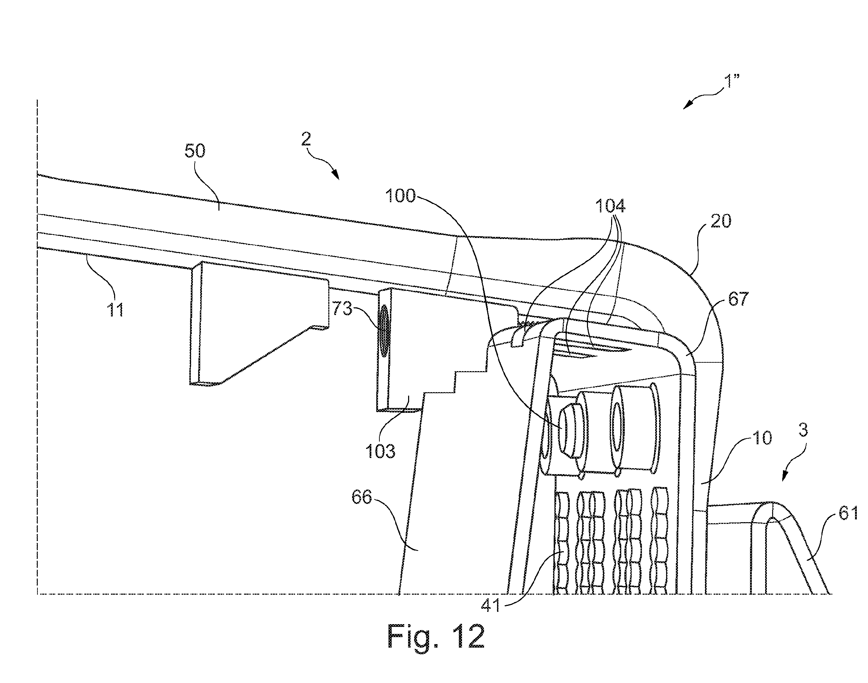

Der Stützkeil 103 kann an seiner schrägen Längsseite treppenförmig abgestuft sein oder eine gerade Steigung aufweisen. Die Breite desselben entspricht der Breite der Auflageaussparungen 104. Ferner ist eine durchgehende Bohrung 73 mit Innengewinde (siehe **Fig. 12**) oberhalb der Längsseite in dem Keil 103 eingebracht. Der Stützkeil 103 kann bei der treppenförmigen Ausführung in festgelegten (und bei der Ausführung als gerade Steigung in variablen) Höhenstufen in eine der Auflageaussparungen 104 eingesetzt werden. Eine sichere Befestigung des Stützkeils 103 in der jeweiligen Auflageaussparung 104 kann durch eine Befestigungsschraube 120 erreicht werden, die durch eine oberhalb des Langlochs 31 angeordnete Bohrung 74 und die durchgehende Bohrung 73 des Stützkeils 103 durchgeführt werden kann.

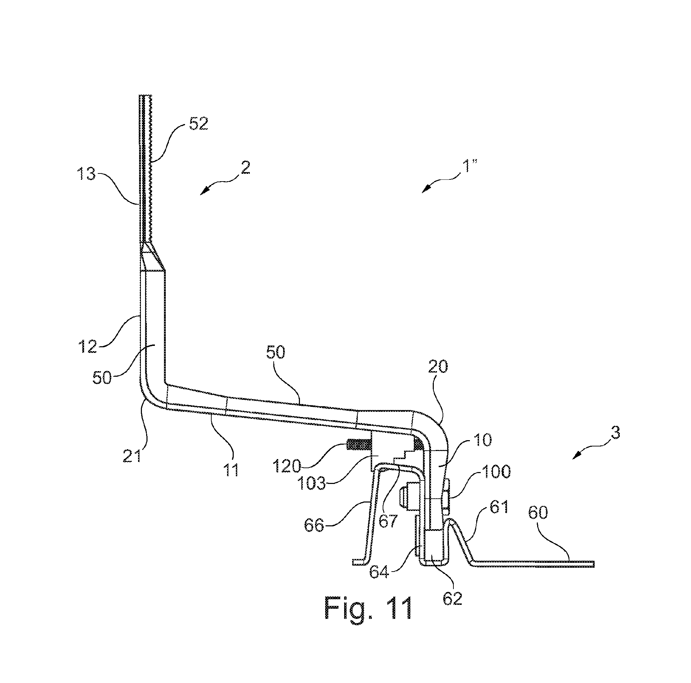

**Fig. 11** ist eine Seitenansicht des Befestigers 1".

**Fig. 12****,** **Fig. 13****,** **Fig. 14** und **Fig. 15** zeigen jeweils eine Detailansicht eines Teils des Befestigers 1".

Es sind eine Menge alternativer Gestaltungen bei dem Solarbefestiger möglich. So sind zum Beispiel alle Zahlenangaben einzelner Merkmale (zum Beispiel Anzahl von Bohrungen) nur exemplarisch. Bei dem Montageabschnitt 13 ist zum Beispiel ein fortlaufender Übergang des vertikalen Distanzabschnitts 12 in den Montageabschnitt 13 möglich. Es kann eine endseitige flache Ausführung der Versteifungskanten 50 mit einer eingepressten Rillenstruktur 52 vorgesehen sein, zum Beispiel um daran ein Befestigungsprofil in variabler Höhe fixieren zu können. Ferner ist es bezüglich der Montageplatte 60 möglich, die Befestigungsbohrung 80 der Aufnahme einer 45° Scheibe dienlich zu machen, über welche der Solarbefestiger wiederum mit einer Schraube, welche in die Dachunterkonstruktion eingeschraubt wird, gegen Hangabtriebskräfte fixiert werden kann. Ferner ist es bei dem Solarbefestiger möglich, Befestigungselement 3 und Haltebügel 2 beide aus verzinktem Blech vorzusehen. Komponenten des Solarbefestigers können bedarfsweise beschichtet sein, zum Beispiel mit Kunststoff, Gummi, Bitumen oder Teer.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Befestiger (1) zum Befestigen eines Gegenstands an einer Unterlage, wobei der Befestiger (1) aufweist:
ein Befestigungselement (3);
einen an dem Befestigungselement (3) höhenverstellbar montierbaren separaten Haltebügel (2);
wobei der Haltebügel (2) einen Montageabschnitt (13) aufweist, der zum Montieren des Gegenstands eingerichtet ist;
wobei das Befestigungselement (3) eine Montageplatte (60) zum Befestigen an der Unterlage aufweist;
wobei der Haltebügel (2) einen Befestigungsabschnitt (10) zum Befestigen an dem Befestigungselement (3) sowie einen Distanzabschnitt (11) und das Befestigungselement (3) einen korrespondierend eingerichteten Stützabschnitt (63) zum Stützen des Befestigungsabschnitts (10) aufweist, wobei der Distanzabschnitt (11) und der Befestigungsabschnitt (10) über eine im Wesentlichen rechtwinklige Biegung (20) ineinander übergehen;
wobei ein Winkel zwischen dem Befestigungsabschnitt (10) und der Montageplatte (60) ein im Wesentlichen rechter Winkel ist;
wobei der Befestiger (1) ferner mindestens eine Verbindungsstütze (101, 102, 103) aufweist, die zwischen dem Haltebügel (2) und dem Befestigungselement (3) angebracht ist und eine Verbindung zwischen dem Distanzabschnitt (11) des Haltebügels (2) und dem Befestigungselement (3) von unten stützend stabilisiert.

2. Befestiger nach Anspruch 1, wobei der Stützabschnitt (63) einen Arretierabschnitt (64) zum Arretieren des Befestigungsabschnitts (10) aufweist, wobei der Arretierabschnitt (64) mindestens eine Arretierbohrung (71) zum Arretieren des Befestigungsabschnitts (10) mittels einer Schraube (100) aufweist.

3. Befestiger nach Anspruch 2, wobei der Arretierabschnitt (64) mindestens eine Positionieraussparung (41) aufweist, die zum Ineingriffnehmen mittels mindestens einer Positioniernoppe (40) des Befestigungsabschnitts (10) angeordnet ist.

4. Befestiger nach Anspruch 3, wobei jede der mindestens einen Positionieraussparung (41) eine Mehrzahl von Eingriffsabschnitten aufweist, von denen jede zum Ineingriffnehmen mittels der mindestens einen Positioniernoppe (40) eingerichtet ist.

5. Befestiger nach einem der Ansprüche 1 bis 4, wobei der Befestigungsabschnitt (10) eine Einrichtung (31) zur höheneinstellbaren Befestigung des Befestigungsabschnitts (10) an dem Befestigungselement (3) aufweist.

6. Befestiger nach einem der Ansprüche 1 bis 5, wobei das Befestigungselement (3) einen Stabilisierungsabschnitt (61) aufweist, der derart angeordnet ist, dass zwischen dem Stabilisierungsabschnitt (61) und dem Stützabschnitt (63) ein Einsteckabschnitt (62) zum stabilen Einstecken des Befestigungsabschnitts (10) gebildet ist, wobei der Stabilisierungsabschnitt (61) einen senkrecht zu der Montageplatte (60) verlaufenden ersten Abschnitt und einen unter einem spitzen Winkel zu dem ersten Abschnitt verlaufenden zweiten Abschnitt aufweist.

7. Befestiger nach einem der Ansprüche 1 bis 6, wobei der Stützabschnitt (63) ein Rechteckprofil (65) aufweist, und wobei zwei vertikal gegenüberliegende Flächen des Rechteckprofils (65) jeweils mindestens eine Stützaussparung (72) aufweisen, wobei zwei gegenüberliegende Stützaussparungen (72) jeweils zum Aufnehmen einer Stützschraube (101) als die mindestens eine Verbindungsstütze zum Stützen des Haltebügels (2) relativ zu dem Befestigungselement (3) eingerichtet sind.

8. Befestiger nach einem der Ansprüche 1 bis 6, aufweisend eine Stützplatte (102) als die mindestens eine Verbindungsstütze, wobei die Stützplatte (102) an einem Fußteil (66) anbringbar und zur Stabilisierung des Haltebügels (2) relativ zu dem Befestigungselement (3) eingerichtet ist.

9. Befestiger nach Anspruch 8, wobei das Fußteil (66) mindestens eine Positionieraussparung (43) aufweist, die zum Ineingriffnehmen mittels mindestens einer Positioniernoppe (42) der Stützplatte (102) angeordnet ist.

10. Befestiger nach Anspruch 9, wobei jede der mindestens einen Positionieraussparung (43) eine Mehrzahl von Eingriffsabschnitten aufweist, von denen jede zum Ineingriffnehmen mittels der mindestens einen Positioniernoppe (42) eingerichtet ist.

11. Befestiger nach einem der Ansprüche 8 bis 10, wobei die Stützplatte (102) ein Langloch (32) aufweist, wobei mittels Einführens einer Befestigungsschraube in das Langloch (32) die Stützplatte (102) an dem Fußteil (66) befestigbar ist.

12. Befestiger nach einem der Ansprüche 1 bis 6, aufweisend einen Stützkeil (103) als die mindestens eine Verbindungsstütze, der an mindestens einer Auflageaussparung (104) an einem Arretierabschnitt (64) des Stützabschnitts (63) und/oder an einem Fußteil (66) sowie an dem Haltebügel (2) anbringbar ist und zur Stabilisierung des Haltebügels (2) relativ zu dem Befestigungselement (3) eingerichtet ist.

13. Befestiger nach Anspruch 12, wobei der Stützkeil (103) eine Bohrung (73) aufweist, mittels welcher unter Verwendung einer Befestigungsschraube der Stützkeil (103) an dem Haltebügel (2) befestigbar ist.

14. Befestiger nach Anspruch 12 oder 13, wobei der Stützkeil (103) eine konstante Steigung aufweist oder treppenförmig abgestuft ist.

15. Verfahren zum Befestigen eines Gegenstands an einer Unterlage mittels eines Befestigers (1), insbesondere mittels eines Befestigers (1) nach einem der Ansprüche 1 bis 14, wobei das Verfahren aufweist:
Befestigen einer Montageplatte (60) eines Befestigungselements (3) des Befestigers (1) an der Unterlage;
höheneinstellbares Montieren eines Haltebügels (2) des Befestigers (1) an dem separat davon vorgesehenen Befestigungselement (3), wobei ein Befestigungsabschnitt (10) des Haltebügels (2) an dem Befestigungselement (3) befestigt wird und ein korrespondierend eingerichteter Stützabschnitt (63) des Befestigungselements (3) den Befestigungsabschnitt (10) stützt, wobei der Distanzabschnitt (11) und der Befestigungsabschnitt (10) über eine im Wesentlichen rechtwinklige Biegung (20) ineinander übergehen;
Montieren des Gegenstands an einem Montageabschnitt (13) des Haltebügels (2);
Anbringen mindestens einer Verbindungsstütze (101, 102, 103) des Befestigers (1) zwischen dem Haltebügel (2) und dem Befestigungselement (3), womit eine Verbindung zwischen dem Distanzabschnitt (11) des Haltebügels (2) und dem Befestigungselement (3) von unten stützend stabilisiert wird;
wobei ein Winkel zwischen dem Befestigungsabschnitt (10) und der Montageplatte (60) ein im Wesentlichen rechter Winkel ist, wenn der Haltebügel (2) an dem Befestigungselement (3) montiert ist.
